# EUROPEAN PATENT APPLICATION

(11) **EP 3 860 184 A1**
(43) Date of publication of application: **04.08.2021**
(21) Application number: 18934630.7
(22) Date of filing: 28.09.2018
(51) Int. Cl.: H04W 16/28, H04W 72/04, H04W 72/12, H04W 76/19

(54) **USER TERMINAL AND WIRELESS COMMUNICATIONS METHOD**

(71) Applicant: NTT DoCoMo, Inc., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/036596
(87) International publication number: WO 2020/066023

(57) **Abstract**

In order to appropriately control communication even in a case where a BFR procedure is performed on a plurality of cells, a user terminal according to an aspect of the present disclosure includes a transmitting section that transmits a Beam Failure Recovery reQuest (BFRQ) to a cell in which a Radio Link Failure has occurred, and a control section that determines, according to whether or not a given secondary cell that supports uplink control channel transmission is configured, at least one of a cell to which the BFRQ is transmitted or a channel utilized for the BFRQ transmission.

## Description

### Technical Field

The present disclosure relates to a user terminal and a radio communication method in a next-generation mobile communication system.

### Background Art

For a universal mobile telecommunications system (UMTS) network, the specifications of long-term evolution (LTE) have been drafted for the purpose of higher speed data rates, low latency, or the like (refer to Non Patent Literature 1). Furthermore, for a purpose of increasing capacity, speed, or the like, of LTE (LTE Rel. 8 and 9), specifications of LTE-advanced (LTE-A, LTE Rel. 10 to 14) have been drafted.

A successor system of LTE (which is also referred to as Future Radio Access (FRA), 5th generation mobile communication system (5G), 5G+ (plus), New Radio (NR), New radio access (NX), Future generation radio access (FX), LTE Rel. 14, 15 or later versions, or the like, for example,) is also under study.

In an existing LTE system (LTE Rel. 8 to 14), monitoring of radio link quality (Radio Link Monitoring (RLM)) is performed. When a Beam Link Failure (Radio Link Failure (RLF)) is detected by RLM, re-establishment of Radio Resource Control (RRC) connection is requested to a user terminal (UE).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, New Radio), implementation of a procedure for detecting a beam failure and switching to another beam (which may also be referred to as a Beam Failure Recovery (BFR) procedure, BFR, or the like) is under study. Furthermore, in the BFR procedure, in a case where a beam failure has occurred, the UE reports a Beam Failure Recovery reQuest (BFRQ) to request recovery from the beam failure.

By the way, for an existing LTE system, it has been specified that BFR is performed only on a given cell (for example, a primary cell) in a case where communication is performed utilizing a plurality of cells. For New Radio, application of the BFR procedure to a plurality of cells is under study.

However, it has not been sufficiently studied how to control operation such as a BFRQ report or a response from a base station to the report in a case where the BFR procedure is performed on the plurality of cells.

Therefore, an object of the present disclosure is to provide a user terminal and a radio communication method capable of appropriately controlling communication even in a case where a BFR procedure is performed on a plurality of cells.

### Solution to Problem

A user terminal according to an aspect of the present disclosure includes a transmitting section that transmits a Beam Failure Recovery reQuest (BFRQ) to a cell in which a Radio Link Failure has occurred, and a control section that determines, according to whether or not a given secondary cell that supports uplink control channel transmission is configured, at least one of a cell to which the BFRQ is transmitted or a channel utilized for the BFRQ transmission.

### Advantageous Effects of Invention

According to an aspect of the present disclosure, communication can be appropriately controlled even in a case where the BFR procedure is performed in a plurality of cells.

### Brief Description of Drawings

Fig. 1 is a diagram illustrating an example of a beam recovery procedure.
Fig. 2 is a diagram illustrating an example of inter-band CA.
Fig. 3A is a diagram illustrating an example of operation by a UE in a case where a PUCCH-SCell is configured, and Fig. 3B is a diagram illustrating an example of operation by UE in a case where a PUCCH-SCell is not configured.
Fig. 4 is a diagram illustrating an example of BFRQ transmission.
Fig. 5 is a diagram illustrating another example of BFRQ transmission.
Fig. 6A to Fig. 6C are diagrams illustrating other examples of BFRQ transmission.
Fig. 7 is a diagram illustrating an example of a schematic configuration of a radio communication system according to an embodiment.
Fig. 8 is a diagram illustrating an example of a configuration of a base station according to an embodiment.
Fig. 9 is a diagram illustrating an example of a configuration of a user terminal according to an embodiment.
Fig. 10 is a diagram illustrating an example of a hardware configuration of a base station and user terminal according to an embodiment.

### Description of Embodiments

For New Radio, communication utilizing beam forming is under study. For example, a UE and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

In a case where beam forming is used, deterioration of radio link quality is assumed because it becomes susceptible to interference by an obstacle. A Beam Link Failure (Radio link failure (RLF)) may frequently occur due to deterioration of the radio link quality. Occurrence of an RLF requires cell re-connection. Therefore, frequent occurrence of RLF leads to deterioration of system throughput.

For New Radio, to reduce occurrence of RLFs, it is under study to perform a procedure for switching to another beam (which may also be referred to as Beam Recovery (BR), Beam Failure Recovery (BFR), Layer 1/Layer 2 (L1/L2) beam recovery, or the like) in a case where quality of a specific beam deteriorates. Note that the BFR procedure may also be simply referred to as BFR.

Note that a Beam Failure (BF) in the present disclosure may also be referred to as a link failure.

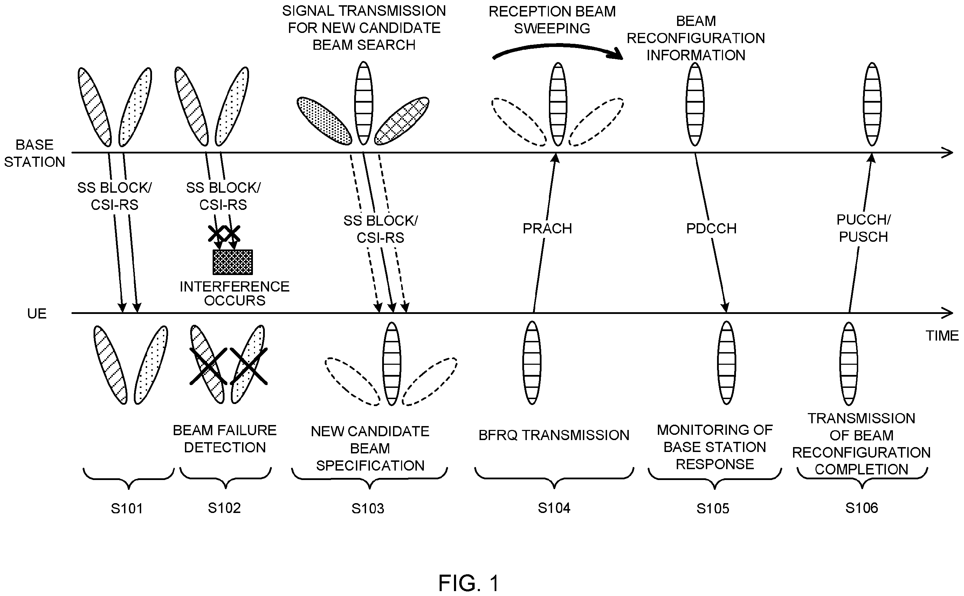

Fig. 1 is a diagram illustrating an example of a beam recovery procedure in Rel-15 New Radio. The number of beams, or the like, is an example, and is not limited to these. In an initial state (Step S101) in Fig. 1, the UE performs measurement based on a Reference Signal (RS) resource transmitted by using two beams.

The RS may be at least one of a Synchronization Signal Block (SSB) or a Channel State Information RS (CSI-RS). Note that an SSB may also be referred to as an SS/Physical Broadcast Channel (PBCH) block, or the like.

The RS may be at least one of a Primary Synchronization Signal (Primary SS (PSS)), a Secondary Synchronization Signal (Secondary SS (SSS)), a mobility reference signal (Mobility RS (MRS)), a signal included in an SSB, the SSB, a CSI-RS, a DeModulation Reference Signal (DMRS), a beam-specific signal, or the like, or a signal configured by extending, changing, or the like, these. An RS measured in Step S101 may also be referred to as a Beam Failure Detection RS (BFD-RS), or the like.

In Step S102, a radio wave from a base station is interfered, and therefore, the UE cannot detect the BFD-RS (or received quality of the RS deteriorates). Such interference may occur due to, for example, an effect of an obstacle between the UE and the base station, fading, interference, or the like.

After a given condition is satisfied, the UE detects a beam failure. For example, the UE may detect occurrence of a beam failure in a case where a Block Error Rate (BLER) is less than a threshold value for all of configured BFD-RS resource configurations (BFD-RSs). When the occurrence of the beam failure is detected, a lower layer (physical (PHY) layer) of the UE may notify (indicate) a higher layer (MAC layer) of a beam failure instance.

Note that a criterion is not limited to the BLER, and may be reference signal received power in a physical layer (Layer 1 Reference Signal Received Power (L1-RSRP)). Furthermore, instead of a RS measurement or in addition to the RS measurement, beam failure detection may be performed on the basis of a Physical Downlink Control Channel (PDCCH), or the like. A BFD-RS may be expected to be Quasi-Co-Location (QCL) with a DMRS of a PDCCH monitored by the UE.

Here, QCL is an index indicating a statistical property of a channel. For example, a case where certain signal/channel and another signal/channel have a relation of QCL may mean that it is possible to assume that at least one of a doppler shift, a doppler spread, an average delay, a delay spread, or a Spatial parameter (for example, a Spatial Rx Parameter) is identical (is QCL with respect to at least one of these) between a plurality of these signals/channels.

Note that the spatial Rx parameter may correspond to a reception beam of the UE (for example, a reception analog beam), or the beam may be specified on the basis of spatial QCL. QCL (or at least one element of QCL) in the present disclosure may be replaced with spatial QCL (sQCL).

Information related to a BFD-RS (for example, an RS index, a resource, number, number of ports, precoding, or the like), information related to beam failure detection (BFD) (for example, the above-described threshold value), or the like may be configured to (notified to) the UE by using higher layer signaling, or the like. Information related to a BFD-RS may also be referred to as information related to a resource for BFR, or the like.

In the present disclosure, higher layer signaling may be, for example, any one of Radio Resource Control (RRC) signaling, Medium Access Control (MAC) signaling, broadcast information, or the like, or a combination of these.

For MAC signaling, for example, a MAC Control Element (MAC CE), a MAC Protocol Data Unit (PDU), or the like may be used. The broadcast information may be, for example, a Master Information Block (MIB), a System Information Block (SIB), Remaining Minimum System Information (RMSI), Other System Information (OSI), or the like.

The MAC layer of the UE may start a given timer (which may also be referred to as a beam failure detection timer) in a case where a beam failure instance notification has been received from the PHY layer of the UE. The MAC layer of the UE may trigger BFR (for example, start any one of random access procedures described later) after having received the beam failure instance notification a certain number of times (for example, beamFailureInstanceMaxCount configured by RRC) or more before the timer expires.

The base station may determine that the UE has detected a beam failure in a case where there is no notification from the UE or when a given signal (a Beam Failure Recovery reQuest in Step S104) is received from the UE.

In Step S103, for beam recovery, the UE starts a search for a new candidate beam to be newly used for communication. By measuring a given RS, the UE may select a new candidate beam corresponding to the RS. The RS measured in Step S103 may also be referred to as a New Candidate Beam Identification RS (NCBI-RS), a CBI-RS, a Candidate Beam RS (CB-RS), or the like. The NCBI-RS may be identical to or different from the BFD-RS. Note that a new candidate beam may also be referred to as a candidate beam.

The UE may determine a beam corresponding to an RS that satisfies a given condition to be a new candidate beam. Of configured NCBI-RSs, the UE may determine a new candidate beam on the basis of, for example, an RS of which L1-RSRP exceeds a threshold value. Note that a criterion is not limited to L1-RSRP. The UE may determine a new candidate beam by using at least any one of L1-RSRP, L1-RSRQ, or an L1-SINR (Signal to Interference plus Noise Ratio). L1-RSRP related to an SSB may also be referred to as SS-RSRP. L1-RSRP related to a CSI-RS may also be referred to as CSI-RSRP. Similarly, L1-RSRQ related to an SSB may also be referred to as SS-RSRQ. L1-RSRQ related to a CSI-RS may also be referred to as CSI-RSRQ. Furthermore, similarly, L1-SINR related to an SSB may also be referred to as an SS-SINR. An L1-SINR related to a CSI-RS may also be referred to as a CSI-SINR.

Information related to an NCBI-RS (for example, an RS resource, number, number of ports, precoding, or the like), information related to New Candidate Beam Identification (NCBI) (for example, the above-described threshold value), or the like may be configured to (notified to) the UE by using higher layer signaling, or the like. Information related to an NCBI-RS may be acquired on the basis of information related to a BFD-RS. Information related to an NCBI-RS may also be referred to as information related to an NBCI resource or the like.

Note that a BFD-RS, an NCBI-RS, or the like may be replaced with a Radio Link Monitoring RS (RLM-RS).

In Step S104, the UE that has specified a new candidate beam transmits a Beam Failure Recovery reQuest (BFRQ). A Beam Failure Recovery reQuest may also be referred to as a beam recovery request signal, a beam failure recovery request signal, or the like.

The BFRQ may be transmitted by using, for example, at least one of a Physical Uplink Control Channel (PUCCH), a Physical Random Access Channel (PRACH), a Physical Uplink Shared Channel (PUSCH), or a configured grant PUSCH.

The BFRQ may include information about the new candidate beam specified in Step S103. A resource for the BFRQ may be associated with the new candidate beam. Beam information may be notified by using a Beam Index (BI), a port index of a given reference signal, a resource index (for example, a CSI-RS Resource Indicator (CRI), an SSB resource indicator (SSBRI)), or the like.

For Rel-15 New Radio, Contention-Based BFR (CB-BFR) that is BFR based on a contention-based Random Access (RA) procedure and Contention-Free BFR (CF-BFR) that is BFR based on a non-contention based random access procedure are under study. In CB-BFR or CF-BFR, the UE may transmit a preamble (which is also referred to as an RA preamble, a Physical Random Access Channel (PRACH), an RACH preamble, or the like) as a BFRQ by using a PRACH resource.

Furthermore, for New Radio, a plurality of PRACH formats (PRACH preamble formats) is under study. A Random Access (RA) preamble that uses each of the PRACH formats includes an RACH OFDM symbol. Furthermore, an RA preamble may include at least one of a cyclic prefix (CP) or a guard period (GP). For example, PRACH formats 0 to 3 use a long sequence preamble sequence in an RACH OFDM symbol. PRACH formats A1 to A3, B1 to B4, C0, and C2 use a short sequence preamble sequence in an RACH OFDM symbol.

Frequency of an unlicensed carrier may be within a frequency range of either a frequency range (FR) 1 or an FR2. The FR1 may be a frequency range lower than a given frequency, and the FR2 may be a frequency range higher than the given frequency.

An RA preamble sequence may be a Zadoff-Chu (ZC) sequence. Length of the preamble sequence may be either 839 (long sequence) or 139. The preamble sequence may be mapped to a frequency resource (for example, a subcarrier) allocated to a PRACH. The RA preamble may use one of a plurality of numerologies. SubCarrier Spacing (SCS) for a long sequence of an FR1 in New Radio may be either 1.25 kHz or 5 kHz. SCS for a short sequence of an FR1 in New Radio may be either 15 kHz or 30 kHz. SCS for a short sequence of an FR2 in New Radio may be either 60 kHz or 120 kHz. SCS for a long sequence in LTE may be 1.25 kHz. SCS for a short sequence in LTE may be 7.5 kHz.

In CB-BFR, the UE may transmit a preamble randomly selected from one or a plurality of preambles. Meanwhile, in CF-BFR, the UE may transmit a preamble uniquely allocated to the UE from the base station. In CB-BFR, the base station may allocate an identical preamble to a plurality of UEs. In CF-BFR, the base station may allocate individual preambles to the UEs.

Note that CB-BFR and CF-BFR may also be referred to as contention-based PRACH-based BFR (CBRA-BFR) and contention-free PRACH-based BFR (CFRA-BFR), respectively. CBRA-BFR may also be referred to as CBRA for BFR. CFRA-BFR may also be referred to as CFRA for BFR.

In either CB-BFR or CF-BFR, information related to a PRACH resource (RA preamble) may be notified by, for example, higher layer signaling (RRC signaling, or the like). For example, the information may include information indicating a correspondence between a detected DL-RS (beam) and the PRACH resource. Different PRACH resources may be associated with respective DL-RSs.

In Step S105, the base station that has detected a BFRQ transmits a response signal corresponding to the BFRQ from the UE (which may also be referred to as a gNB response, or the like). The response signal may include reconfiguration information for one or a plurality of beams (for example, DL-RS resource configuration information).

The response signal may be transmitted, for example, in a UE common Search Space of a PDCCH. The response signal may be notified by using PDCCH (DCI) scrambled in a Cyclic Redundancy Check (CRC) by an identifier of the UE (for example, Cell-Radio RNTI (C-RNTI)). The UE may determine at least either a transmission beam or a reception beam to use, on the basis of beam reconfiguration information.

The UE may monitor the response signal on the basis of at least either a COntrol REsource SET (CORESET) for BFR or a Search Space set for BFR.

For CB-BFR, successful contention resolution may be determined in a case where the UE has received a PDCCH corresponding to a C-RNTI related to the UE.

For processing in Step S105, a period during which the UE monitors a response corresponding to the BFRQ from the base station (for example, the gNB) may be configured. The period may also be referred to as, for example, a gNB response window, a gNB window, a Beam Failure Recovery reQuest response window, a BFRQ response window, or the like. The UE may retransmit the BFRQ in a case where no gNB response has been detected during the window period.

In Step S106, the UE may transmit to the base station a message indicating that beam reconfiguration has been completed. The message may be transmitted by a PUCCH or a PUSCH, for example.

Beam recovery success (BR success) may represent a case where Step S106 has been reached, for example. Meanwhile, a beam recovery failure (BR failure) may correspond to, for example, the number of times of BFRQ transmission having reached a given number of times, or a Beam-failure-recovery-Timer being expired.

Note that numbers of these steps are merely numbers for explanation. A plurality of these steps may be combined, or these steps may be changed in order. Furthermore, whether or not to perform BFR may be configured to the UE by using higher layer signaling.

By the way, as described above, it is specified that for an existing LTE system that BFR is performed only on a given cell (for example, a primary cell) in a case where communication is performed by utilizing a plurality of cells, whereas, for New Radio, application of a BFR procedure to a plurality of cells is under study.

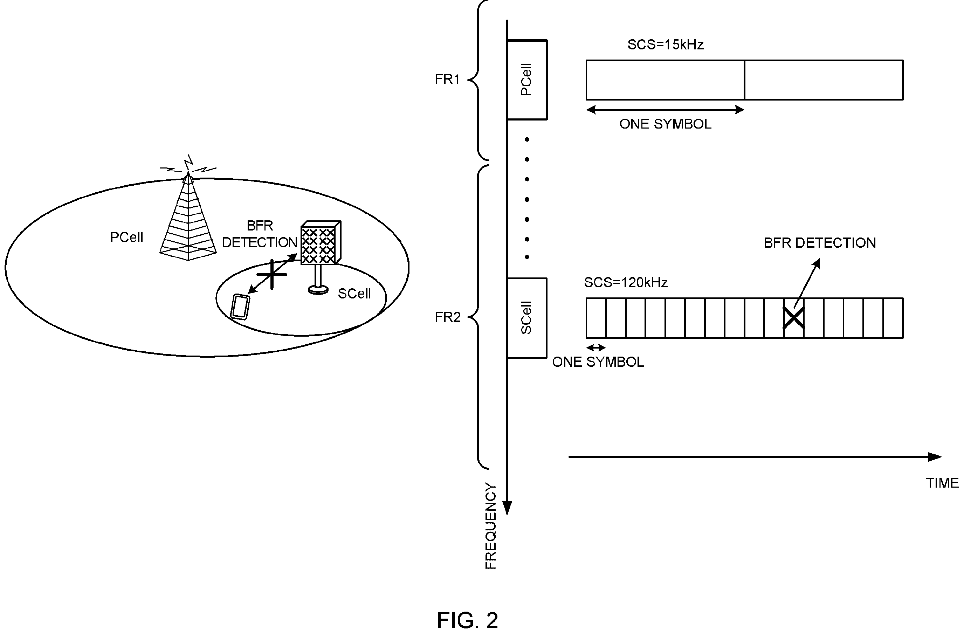

A configuration for performing communication utilizing a plurality of cells is, for example, an Intra-band carrier aggregation (CA) or an Inter-band carrier aggregation (CA). Fig. 2 illustrates an example of a case where an Inter-band CA is applied.

Fig. 2 illustrates a case where at least one frequency range (carrier frequency) of a Frequency Range 1 (FR1) and a Frequency Range 2 (FR2) as a plurality of frequency bands is used. Note that the number of frequency bands applied is not limited to two. The frequency band (or frequency domain) may be divided into three or more.

For example, the FR1 may be a frequency range of 6 GHz or less (sub-6 GHz), and the FR2 may be a frequency range higher than 24 GHz (above-24 GHz). The FR1 may be defined as a frequency range in which at least one of 15 kHz, 30 kHz, and 60 kHz is used as Sub-Carrier Spacing (SCS). The FR2 may be defined as a frequency range in which at least one of 60 kHz and 120 kHz is used as SCS. Note that frequency ranges, definitions, or the like of the FR1 and the FR2 are not limited to these. For example, the FR1 may be a frequency range higher than the FR2.

A cell utilizing the FR1 and a cell using the FR2 may be configured to apply different numerologies (for example, SubCarrier Spacing, or the like). Fig. 2 illustrates, as an example, a case where SubCarrier Spacing (SCS) applied by a cell included in the FR1 is 15 kHz, and SubCarrier Spacing applied by a cell included in the FR2 is 120 kHz. Note that different numerologies may be applied to cells included in the same frequency band.

Fig. 2 illustrates a case where a CA (for example, FR1-FR2 CA) is applied over a plurality of frequency bands. In this case, a CA is applied among one or more cells included in the FR1 and one or more cells included in the FR2. In this case, a specific cell included in the FR1 or the FR2 may be set as a primary cell. Fig. 2 illustrates a case where a cell included in the FR1 is a primary cell and a cell included in the FR2 is a secondary cell.

In a case where a beam failure (BF) has occurred in any one of cells in a configuration utilizing a plurality of cells (refer to Fig. 2, for example), the UE performs a beam recovery (BFR) procedure. For example, the UE transmits a Beam Failure Recovery reQuest (which is also referred to as a BFRQ) by utilizing a PUCCH in a given cell configured in advance.

For example, in a case where BFR occurs in a secondary cell included in the FR2, it becomes a problem how to control reporting operation of a BFRQ (for example, selection of a cell or channel in which transmission is performed) or operation of a response from the base station to the report, or the like. In a case where the BFR procedure is performed on a plurality of cells, deterioration of communication quality, or the like may occur if a BFRQ report, a response to the report, or the like is not appropriately controlled.

In a case where numerology, or the like is different between the primary cell (for example, an FR1) and the secondary cell (for example, an FR2), it is conceivable to utilize the secondary cell (or a cell of the FR2) for BFR operation for the secondary cell. Furthermore, a resource can be configured more flexibly in a time domain for a Physical Uplink Control Channel as compared with a PRACH. Therefore, it is conceivable to utilize a Physical Uplink Control Channel in addition to a PRACH as a channel utilized for BFRQ transmission.

Therefore, the present inventors have conceived of determining, on the basis of a given condition, at least one of a cell to which and a channel by which BFRQ transmission is performed. Specifically, the present inventors have focused on a given secondary cell capable of UL transmission utilizing a Physical Uplink Control Channel (which is also referred to as a PUCCH-SCell), and conceived of BFRQ transmission utilizing a Physical Uplink Control Channel of the given secondary cell. Furthermore, the present inventors have focused on the fact that a given secondary cell may or may not be configured, and conceived of determining at least one of a cell or channel by which BFRQ transmission (or a response to BFRQ transmission) is performed on the basis of whether or not a given secondary cell is configured.

Hereinafter, an embodiment according to the present disclosure will be described in detail with reference to the drawings. The following aspects may be applied individually or in combination. Note that the following description describes a case where BFRQ transmission is performed by utilizing a Physical Uplink Control Channel. If transmission of a Physical Uplink Shared Channel (for example, a PUSCH) is performed at transmission timing of a BFRQ, the BFRQ may be transmitted by utilizing a PUSCH. Furthermore, BFRQ transmission may be performed by utilizing a channel other than a Physical Uplink Control Channel according to another given condition (for example, a condition where a PUCCH secondary cell is not configured, or the like).

Furthermore, the present embodiment is applicable to both an intra-band CA and an inter-band CA (for example, F1-F2 CA). Alternatively, a part of the configuration illustrated below may be applied to an intra-band CA, and another configuration (for example, a BFR procedure utilizing a PUCCH-SCell) may be controlled to be applied to an inter-band CA.

### (First aspect)

A first aspect describes a case where a cell to which a BFR request (BFRQ) is transmitted is determined on the basis of a given rule.

First, UE operation in a case where a secondary cell capable of transmitting a PUCCH (also referred to as a PUCCH-SCell) is configured and a case where a PUCCH-SCell is not configured are described. Note that "a PUCCH-SCell is configured" may be replaced with "PUCCH transmission utilizing an SCell (PUCCH on SCell) is configured".

### <PUCCH on SCell>

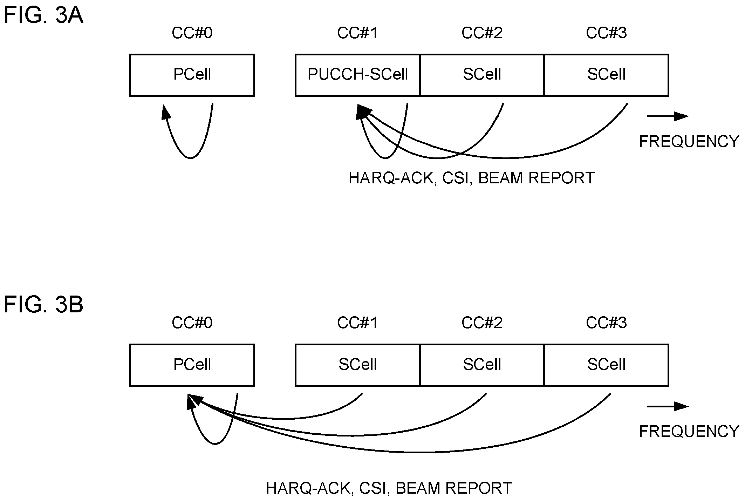

In a case where a PUCCH-SCell is configured, the UE transmits Uplink Control Information (UCI) utilizing a PUCCH of the PUCCH-SCell (refer to Fig. 3A). Specifically, the UE multiplexes UCI corresponding to an SCell included in the same cell group as the PUCCH-SCell to the PUCCH of the PUCCH-SCell and transmits the UCI. The UCI may include at least one of a HARQ-ACK or a Channel State Information (CSI). Furthermore, the UE may also transmit a beam report by utilizing a PUCCH.

Fig. 3A illustrates a case where CC#1 is equivalent to a PUCCH-SCell and CC#2 and CC#3 are included in the same cell group as the PUCCH-SCell. In this case, the UE may transmit at least one of a HARQ-ACK, CSI, or beam report corresponding to the CC#1 to CC#3 by utilizing the PUCCH configured to the CC#1.

In a case where a PUCCH-SCell is not configured, the UE transmits Uplink Control Information (UCI) utilizing a PUCCH of the PCell (refer to Fig. 3B). Specifically, the UE multiplexes UCI corresponding to a secondary cell to the PUCCH of the PCell and transmits the UCI. Furthermore, the UE may also transmit a beam report by utilizing a PUCCH.

In Fig. 3B, a secondary cell capable of transmitting a PUCCH is not configured, and therefore, the UE may transmit at least one of the HARQ-ACK, CSI, or beam report corresponding to the CC#1 to CC#3 by utilizing a PUCCH configured to a PCell (here, CC#0).

Thus, a cell to which a HARQ-AC, CSI, a beam report, or the like is transmitted differs depending on whether or not a PUCCH-SCell is configured. Therefore, in a case where BFRQ transmission utilizing a PUCCH is supported, it is conceivable that a cell to which or a channel by which a BFRQ is transmitted may change depending on whether or not a PUCCH-SCell is configured. Therefore, described below is a case where a cell to which BFRQ transmission is performed is determined on the basis of a given rule including whether or not the PUCCH-SCell is configured, or the like.

### <Case where BFR is detected in PCell>

In a case where the UE detects BFR in a PCell, the UE may transmit a BFRQ to the PCell. In this case, the UE may transmit the BFRQ by utilizing the PUCCH of the PCell. The configuration may be such that a BFRQ for BFR occurred in a PCell is transmitted to the PCell even in a case where a PUCCH-SCell is configured.

Alternatively, the configuration may be such that a BFRQ corresponding to BFR occurred in a PCell is transmitted to the PUCCH-SCell, in a case where a PUCCH-SCell is configured. For example, in a case where communication environment (for example, a channel state, or the like) for the PCell is unfavorable, it is effective to transmit the BFRQ to another cell (for example, the PUCCH-SCell). This is especially effective in a case where frequency ranges or positions are different between the PCell and the PUCCH-SCell (for example, FR1-FR2 CA, or the like).

### <Case where BFR is detected in SCell>

In a case where the UE detects BFR in an SCell, the UE may transmit a BFRQ to a PCell or a given SCell.

### [Option 1]

For example, on the basis of whether or not a PUCCH-SCell is configured, the UE may determine a cell to which the BFRQ corresponding to the BFR detected in the SCell is transmitted.

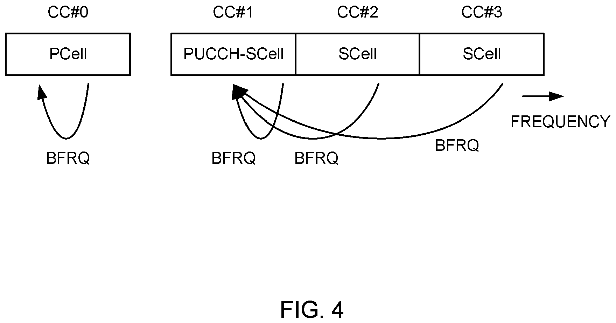

In a case where a PUCCH-SCell is configured, the UE may transmit the BFRQ corresponding to the BFR detected in the SCell (for example, an SCell included in a PUCCH group to which the PUCCH-SCell belongs) to a given SCell. The UE may select a PUCCH-SCell included in the PUCCH group as the given SCell (refer to Fig. 4).

For example, in a case where the UE detects BFR in any one of the CC#1 to CC#3 included in the same PUCCH group, the UE may transmit a BFRQ corresponding to the BFR to the PUCCH-SCell (here, CC#1). In this case, the BFRQ may be transmitted by utilizing a PUCCH of the PUCCH-SCell.

Alternatively, the UE may perform control so as to transmit a BFRQ to the SCell that has detected the BFR. For example, in a case where the UE detects the BFR in the CC#2 in Fig. 4, the UE may perform control so as to transmit the BFRQ corresponding to the BFR to the CC#2.

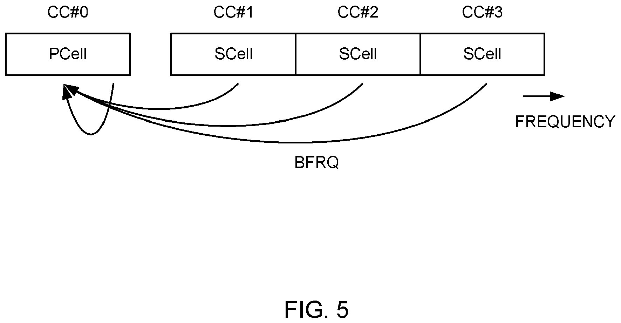

In a case where a PUCCH-SCell is not configured, the UE may transmit a BFRQ corresponding to the BFR detected in the SCell to the PCell (refer to Fig. 5). For example, in a case where the UE has detected BFR in any one of the CC#1 to CC#3, the UE may transmit a BFRQ corresponding to the BFR to the PCell (here, CC#0). In this case, the UE may transmit the BFRQ by utilizing the PUCCH of the PCell.

### [Option 2]

On the basis of information notified (or configured) from the base station, the UE may determine a cell to which the BFRQ corresponding to the BFR detected in the SCell is transmitted.

A given cell configured from the base station may be a primary cell, a PSCell, or a PUCCH SCell. For the UE, the base station may utilize a higher layer (for example, RRC signaling) to configure a cell to which BFRQ transmission is performed. For example, the base station may include information related to a cell utilized for BFRQ transmission (for example, a cell index) in a given higher layer parameter (for example, BeamFailureRecoveryConfig) and transmit the higher layer parameter to the UE. Furthermore, the base station may notify the UE of a PUCCH configuration (for example, a PUCCH resource for a BFRQ) utilized for BFRQ transmission by using the given higher layer parameter.

Note that the given higher layer parameter (for example, BeamFailureRecoveryConfig) may include, in addition to information related to a cell and information related to a PUCCH resource, at least one of information about a list of reference signal (for example, at least one of a CSI-RS or a SSB) candidates indicating candidate beams for recovery, information about a Search Space utilized for a response to a BFRQ, and information about the number of SSBs per PUCCH occasion. Of course, another information may be included.

On the basis of the given higher layer parameter notified from the base station, the UE determines a given cell to which a BFRQ is transmitted, and controls the BFR procedure (for example, BFRQ transmission utilizing a PUCCH, or the like) in the given cell. Thus, with a configuration in which BFRQ transmission is performed in a cell configured from the base station, the UE can flexibly control the BFR procedure (for example, BFRQ transmission, or the like).

Note that, although the BFR procedure performed for each cell (or CC) has been described, the BFR procedure is not limited to this. The BFR procedure may be performed in units of Bandwidth parts (BWPs). For example, one BWP or a plurality of BWPs may be configured in a cell (or CC). In this case, the UE may be notified of the given higher layer parameter (for example, BeamFailureRecoveryConfig) for each BWP configured to the cell.

### [Option 3]

For example, in a case where the UE detects BFR in the SCell, the UE may perform control so as to always transmit a BFRQ corresponding to BFR to a given cell (for example, a PCell). In this case, the UE may utilize a PRACH or PUSCH for the PCell. The PUSCH may be at least one of a PUSCH utilized for transmission of physical layer information, a PUSCH utilized for transmission of a DMRS or transmission of sequence selection of a base sequence, or a PUSCH utilized for transmission of an MAC CE.

Thus, with a configuration in which BFRQ transmission is performed by utilizing a cell different from a cell in which a BF has occurred (or different from a cell that requires BFR), success probability of the BFRQ transmission is increased.

### (Second aspect)

A second aspect describes a case where a channel by which a BFR request (BFRQ) is transmitted is determined on the basis of a given rule. Note that the second aspect can be applied in combination with the first aspect as appropriate.

### <Whether or not PUCCH-SCell is configured>

The UE may determine a channel utilized for BFRQ transmission corresponding to BFR detected in an SCell on the basis of whether or not a PUCCH-SCell is configured.

In a case where a PUCCH-SCell is configured, the UE may transmit a BFRQ corresponding to the BFR detected in the SCell (for example, an SCell included in a PUCCH group to which the PUCCH-SCell belongs) by utilizing a PUCCH.

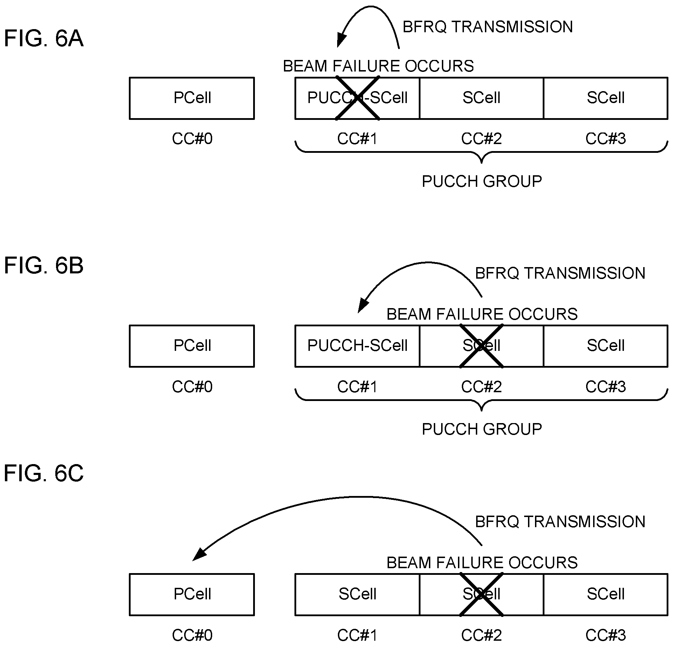

In a case where the UE detects BFR in the PUCCH-SCell, the UE may transmit a BFRQ corresponding to the BFR utilizing a PUCCH of the PUCCH-SCell (refer to Fig. 6A). In Fig. 6A, CC#1 to CC#3, which are SCells, constitute a PUCCH group, and the CC#1 is equivalent to a PUCCH-SCell.

In a case where BFRQ transmission is performed by a PUCCH of a PUCCH-SCell, the UE may utilize a scheduling request (SR). In this case, when BF occurs (or BFR is detected) in any one of the CC#1 to CC#3, the UE may transmit an SR to the CC#1 (PUCCH-SCell) by utilizing the PUCCH. Although an amount of information that can be notified by an SR is small, it is possible to reduce an increase in UL overhead by utilizing an SR in a case where only presence or absence of a BFRQ is notified.

Alternatively, the UE may transmit a BFRQ as a part of a beam report. In this case, the BFRQ is included in Uplink Control Information (for example, UCI) and transmitted on the PUCCH (for example, in a given PUCCH format). For example, in a case where the UE includes a BFRQ in UCI and transmits the BFRQ in a given PUCCH format (for example, PF2, 3, or 4), another information other than BFR information (for example, 1 bit) can also be transmitted.

Note that a PUCCH resource that multiplexes an SR or beam report may be a given PUCCH resource selected from a plurality of PUCCH resources. For example, PUCCH resources corresponding to a plurality of beams (for example, beams transmitted or swept from the base station) are configured in advance. The UE may transmit a PUCCH by utilizing a PUCCH resource corresponding to a most suitable beam (for example, an SSB index) of beams (for example, a synchronization signal block or a CSI-RS) received from the base station.

With this arrangement, even in a case where BFRQ transmission is performed to a cell (for example, a PUCCH-SCell) in which a BF has occurred, BFRQ transmission can be appropriately performed.

Note that, in a case where a beam condition of the PUSCH-SCell is not preferable (in a case where there is no new candidate beam, or the like), a BFRQ may be transmitted by utilizing another cell (for example, a PUCCH of the PCell).

In a case where the UE has detected BFR in an SCell other than the PUCCH-SCell (for example, the CC#2 in Fig. 6B), the UE may transmit a BFRQ by utilizing a PUCCH of the PUCCH-SCell (for example, the CC#1 in Fig. 6B) included in the same PUCCH group (refer to Fig. 6B). In this case, a BFRQ corresponding to the BFR is transmitted by a cell different from a cell in which the BFR has been detected, and therefore, BFRQ transmission can be appropriately performed even in a case where a beam condition in the CC#2 is unfavorable.

Note that the UE may allocate a PUCCH to the SCell (for example, the CC#2 in Fig. 4) that has detected the BFR and transmit the BFRQ. In this case, configuration may be such that the PUCCH is configured to an SCell other than the PUCCH-SCell as an exception only when BFRQ transmission is performed. Alternatively, the BFRQ may be transmitted by utilizing the PUSCH of the CC#2.

Furthermore, in a case where BFR has been detected in the PCell, the UE may transmit a BFRQ corresponding to the BFR utilizing at least either PUCCH of the PCell or a PUCCH of the PUCCH-SCell. With this arrangement, it is possible to flexibly control BFRQ transmission according to communication environment (for example, a beam condition), a positional relation between a PCell and a PUCCH-SCell, a frequency band, or the like.

In a case where a PUCCH-SCell is not configured, the UE may transmit to a PCell a BFRQ corresponding to the BFR detected in an SCell (for example, an SCell included in a PUCCH group to which the PUCCH-SCell belongs) (refer to Fig. 6C) .

In a case where BFRQ transmission is performed on a PUCCH of the PCell, the UE may utilize a scheduling request (SR). In this case, in a case where a BF has occurred (or BFR is detected) in any one of the CC#1 to CC#3, the UE may multiplex an SR including the BFRQ to the PUCCH and transmit the SR to the CC#0 (PCell). Although an amount of information that can be notified by an SR is small, it is possible to reduce an increase in UL overhead by utilizing an SR in a case where only presence or absence of a BFRQ is notified.

Alternatively, the UE may transmit a BFRQ as a part of a beam report. In this case, the BFRQ is included in Uplink Control Information (for example, UCI) and transmitted on the PUCCH (for example, in a given PUCCH format). For example, in a case where the UE includes a BFRQ in UCI and transmits the BFRQ in a given PUCCH format (for example, PF2, 3, or 4), another information other than BFR information (for example, 1 bit) can also be transmitted. Furthermore, the UE may include a BFRQ in an MAC CE and transmit the MAC CE to the PCell.

Alternatively, in a case where a PUCCH-SCell is not configured, the UE may transmit a BFRQ corresponding to the BFR detected in the SCell by utilizing a channel other than a PUCCH channel. The channel other than the PUCCH may be at least one of a PRACH or a PUSCH. The PUSCH may be at least one of a PUSCH utilized for transmission of physical layer information, a PUSCH utilized for transmission of a DMRS or transmission of sequence selection of a base sequence, or a PUSCH utilized for transmission of an MAC CE.

### <Whether or not SCell is activated>

The UE may transmit a BFRQ by utilizing a channel other than a PRACH in a case where an SCell is configured (or a secondary cell is activated). The channel other than the PRACH may be at least one of a PUCCH or a PUSCH. The PUSCH may be at least one of a PUSCH utilized for transmission of physical layer information, a PUSCH utilized for transmission of a DMRS or transmission of sequence selection of a base sequence, or a PUSCH utilized for transmission of an MAC CE.

The UE may transmit a BFRQ by utilizing a PRACH (for example, a BFRQ correspond to a PCell) in a case where an SCell is not configured (or a secondary cell is deactivated).

### <BFR detection cell and BFRQ transmission cell>

A channel utilized for BFRQ transmission may be determined on the basis of a relation between a BFR detection cell and a BFRQ transmission cell.

In a case where a cell in which a BF has occurred (or BFR is detected) and a cell as a Destination of a BFRQ are the same, the UE may perform BFRQ transmission by utilizing a PUCCH or a PRACH. For example, in a case where the UE detects BFR in a PUCCH-SCell and transmits to the PUCCH-SCell a BFRQ corresponding to the BFR, the UE transmits the BFRQ utilizing the PUCCH. Furthermore, in a case where the UE detects BFR in a SCell and transmits to the SCell a BFRQ corresponding to the BFR, the UE may transmit the BFRQ by utilizing a PRACH. With this arrangement, a transmission channel can be appropriately selected according to types of a BFR detection cell and BFRQ transmission cell.

In a case where a cell in which a BF has occurred (or BFR is detected) and a cell as a Destination of a BFRQ are different (refer to Fig. 6B and Fig. 6C, for example), the UE may transmit the BFRQ to the cell that transmits the BFRQ by utilizing UCI or an MAC CE. For example, in a case where the UE detects BFR in a SCell and transmits a BFRQ corresponding to the BFR to the PUCCH-SCell, the UE transmits a UCI including the BFRQ on a PUCCH. Alternatively, in a case where the UE detects BFR in a SCell and transmits to the PCell a BFRQ corresponding to the BFR, the UE may transmit UCI including the BFRQ on a PUCCH or transmit the BFRQ by utilizing an MAC CE.

### (Third aspect)

In a third aspect, at least either a cell or channel that receives a response to a BFRQ on the basis of a given rule is determined. A response to a BFRQ may be referred to as a BFRQ response or a BFRQR. Note that the third aspect can be applied in combination with the first aspect or the second aspect as appropriate.

In a case where a BF has occurred in any one of a plurality of cells in a configuration utilizing the plurality of cells (refer to Fig. 2, for example), the UE performs a BFR procedure. In the BFR procedure, the UE that has transmitted a BFRQ receives a BFRQ response (BFRQR) equivalent to a response signal corresponding to the BFRQ. For example, the UE may control BFRQ response reception on the basis of at least one of the following given rules.

### <Rule 3-1>

The UE may control reception of response to a BFRQ on the basis of whether or not a PUCCH-SCell is configured.

In a case where a PUCCH-SCell is configured, the UE may assume that a BFRQ response will be transmitted on a given SCell. BFRQ response reception may utilize a given DL channel (for example, a PDSCH scheduled by given DCI, or the like).

The given SCell may be a PUCCH-SCell. Alternatively, the given SCell may be an SCell other than the PUCCH-SCell (for example, an SCell included in a PUCCH group including the PUCCH-SCell).

In a case where a PUCCH-SCell is not configured, the UE may assume that a BFRQ response will be transmitted by a PCell. In a case where a PUCCH-SCell is not configured and transmission of a response signal (for example, a delivery confirmation signal) corresponding to the BFRQ response is considered, an increase in processing load in the UE can be reduced by utilizing a PCell.

### <Rule 3-2>

A BFRQ response corresponding to a BFRQ may be transmitted by a cell in which the UE has detected BFR. For example, in a case where the UE has detected BFR in a given cell and has transmitted a BFRQ for the BFR, the UE may perform reception processing assuming that a BFRQ response is transmitted by the given cell from the base station in which the BFR has been detected.

Thus, with a configuration in which reception of a BFRQ response is performed by utilizing a cell in which BFR has been detected, it is possible to reduce concentration of BFRQ response reception in a given cell.

### <Rule 3-3>

A BFRQ response corresponding to a BFRQ may be transmitted by a cell to which the UE has transmitted a BFRQ. For example, in a case where the UE has transmitted a BFRQ to a given cell, the UE may perform reception processing assuming that a BFRQ response is transmitted from the base station by the given cell to which the BFR is transmitted. With this arrangement, BFRQ transmission and BFRQ response reception can be performed in the same cell, and therefore UE operation can be simplified.

Furthermore, a cell that detects BFR, a cell to which a BFRQ is transmitted, and a cell that receives a BFRQ response may be controlled to be the same.

### <Rule 3-4>

A BFRQ response corresponding to a BFRQ may be transmitted by a given cell configured from a network (for example, a base station). On the basis of information notified (or configured) from the base station, the UE may determine a cell to which a BFRQ response is transmitted.

The given cell configured from the base station may be a primary cell, a PSCell, or an SCell. By utilizing a higher layer (for example, RRC signaling), the base station may configure to the UE a cell by which BFRQ response reception is performed. For example, the base station may include information related to a cell utilized for BFRQ response reception (for example, a cell index) in a given higher layer parameter (for example, BeamFailureRecoveryConfig) and transmit the higher layer parameter to the UE.

Note that a given higher layer parameter (for example, BeamFailureRecoveryConfig) may include at least one of information related to a cell utilized for BFRQ transmission, information about a PUCCH configuration utilized for the BFRQ transmission, information about a list of reference signal (for example, at least one of a CSI-RS or a SSB) candidates indicating candidate beams for recovery, information about a Search Space utilized for a response to BFR, and information about the number of SSBs per PUCCH occasion. Of course, another information may be included.

The UE determines, on the basis of the given higher layer parameter notified from the base station, a given cell by which a BFRQ response is received, and controls the BFR procedure (for example, reception of a response signal corresponding to the BFRQ, or the like) in the given cell. Thus, with a configuration in which BFRQ response reception is performed by a cell configured from the base station, the UE can flexibly control the BFR procedure.

Note that, although the BFR procedure performed for each cell (or CC) has been described in the above-described first aspect to third aspect, the BFR procedure is not limited to this. The BFR procedure may be performed in units of Bandwidth parts (BWPs). For example, one BWP or a plurality of BWPs may be configured in a cell (or CC). In this case, the UE may be notified of the given higher layer parameter (for example, BeamFailureRecoveryConfig) for each BWP configured to the cell.

### (Radio communication system)

Hereinafter, a configuration of a radio communication system according to an embodiment of the present disclosure will be described. In this radio communication system, communication is performed by using any one of or a combination of the radio communication methods according to the above-described embodiments of the present disclosure.

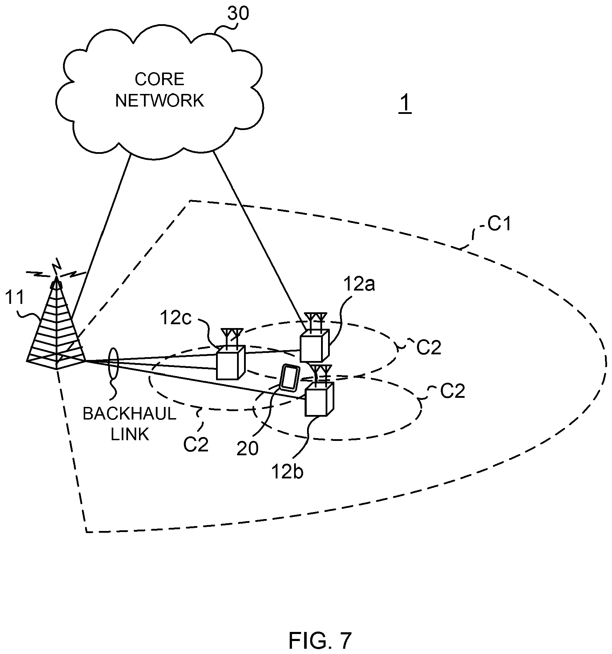

Fig. 7 is a diagram illustrating an example of a schematic configuration of the radio communication system according to an embodiment. A radio communication system 1 may be a system that implements communication using Long Term Evolution (LTE), 5th generation mobile communication system New Radio (5G New Radio), or the like specified by Third Generation Partnership Project (3GPP).

Furthermore, the radio communication system 1 may support dual connectivity (Multi-RAT Dual Connectivity (MR-DC)) between a plurality of Radio Access Technologies (RATs). The MR-DC may include dual connectivity between LTE (Evolved Universal Terrestrial Radio Access (E-UTRA)) and New Radio (E-UTRA-NR Dual Connectivity (EN-DC)), dual connectivity between New Radio and LTE (NR-E-UTRA Dual Connectivity (NE-DC)), or the like.

In the EN-DC, an E-UTRA (LTE) base station (eNB) is a Master Node (MN), and a New Radio base station (gNB) is a Secondary Node (SN). In the NE-DC, a New Radio base station (gNB) is an MN, and an E-UTRA (LTE) base station (eNB) is an SN.

The radio communication system 1 may support dual connectivity between a plurality of base stations in the same RAT (for example, dual connectivity in which both an MN and an SN are New Radio base stations (gNB) (NR-NR dual connectivity (NN-DC)).

The radio communication system 1 may include a base station 11 that forms a Macro cell C1 with a relatively wide coverage, and base stations 12 (12a to 12c) disposed in the Macro cell C1, each of which forms a Small cell C2 narrower than the Macro cell C1. A user terminal 20 may be positioned in at least one cell. Disposition, number, and the like of each of the cells and the user terminal 20 are not limited to the aspects illustrated in the drawings. Hereinafter, the base stations 11 and 12 will be collectively referred to as a "base station 10", unless these base stations are distinguished from each other.

The user terminal 20 may be connected to at least one of a plurality of base stations 10. The user terminal 20 may utilize at least either one of a Carrier Aggregation and dual connectivity (DC) using a plurality of Component Carriers (CCs).

Each of the CCs may be included in at least one of a Frequency Range 1 (FR1) and a Frequency Range 2 (FR2). The Macro cell C1 may be included in the FR1, and the Small cell C2 may be included in the FR2. For example, the FR1 may be a frequency range of 6 GHz or less (sub-6 GHz), and the FR2 may be a frequency range higher than 24 GHz (above-24 GHz). Note that frequency ranges, definitions, or the like of the FR1 and FR2 are not limited to these, and, for example, the FR1 may correspond to a higher frequency range than the FR2.

Furthermore, the user terminal 20 may perform communication in each of the CCs by using at least one of Time Division Duplex (TDD) or Frequency Division Duplex (FDD).

The plurality of base stations 10 may be connected by wire (for example, an optical fiber, X2 interface, or the like compatible with Common Public Radio Interface (CPRI)) or wirelessly (for example, New Radio communication). For example, in a case where New Radio communication is utilized as a backhaul between the base stations 11 and 12, the base station 11 corresponding to a higher-level station may also be referred to as an Integrated Access Backhaul (IAB) donor, and a base station 12 corresponding to a relay station (relay) may also be referred to as an IAB node.

A base station 10 may be connected to a core network 30 via another base station 10 or directly. The core network 30 may include, for example, at least one of an Evolved Packet Core (EPC), a 5G Core Network (5GCN), a Next Generation Core (NGC), or the like.

The user terminal 20 may be a terminal corresponding to at least one of communication methods such as LTE, LTE-A, or 5G.

In the radio communication system 1, a radio access method based on Orthogonal Frequency Division Multiplexing (OFDM) may be utilized. For example, in at least either Downlink (DL) or Uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), or the like may be utilized.

A radio access method may also be referred to as a waveform. Note that, in the radio communication system 1, another radio access method (for example, another single carrier transmission method or another multi-carrier transmission method) may be used as a radio access method for the UL or the DL.

In the radio communication system 1, as a downlink channel, a Physical Downlink Shared Channel (PDSCH) shared by each of the user terminals 20, a Physical Broadcast Channel (PBCH), a Physical Downlink Control Channel (PDCCH), or the like may be used.

Furthermore, in the radio communication system 1, as an uplink channel, a Physical Uplink Shared Channel (PUSCH) shared by each of the user terminals 20, a Physical Uplink Control Channel (PUCCH), a Physical Random Access Channel (PRACH), or the like may be used.

The PDSCH may transmit user data, higher layer control information, a System Information Block (SIB), or the like. The PUSCH may transmit user data, higher layer control information, or the like. Furthermore, the PBCH may transmit Master Information Block (MIB).

The PDCCH may transmit lower layer control information. The lower layer control information may include, for example, Downlink Control Information (DCI) including scheduling information of at least either PDSCH or PUSCH.

Note that DCI that schedules a PDSCH may also be referred to as DL assignment, DL DCI, or the like, and DCI that schedules a PUSCH may also be referred to as a UL grant, UL DCI, or the like. Note that a PDSCH may be replaced with DL data, and a PUSCH may be replaced with UL data.

A COntrol REsource SET (CORESET) or a Search Space may be utilized to detect a PDCCH. A CORESET corresponds to a resource that searches for DCI. A Search Space corresponds to a search domain and a search method for PDCCH candidates. One CORESET may be associated with one or a plurality of Search Spaces. The UE may monitor a CORESET associated with a certain Search Space on the basis of a Search Space configuration.

One SS may correspond to a PDCCH candidate corresponding to one or a plurality of aggregation levels. One or a plurality of Search Spaces may also be referred to as a Search Space set. Note that "Search Space", "Search Space set", "Search Space configuration", "Search Space set configuration", "CORESET", "CORESET configuration", and the like in the present disclosure may be replaced with one another.

The PUCCH may transmit Channel State Information (CSI), delivery confirmation information (for example, Hybrid Automatic Repeat reQuest (HARQ-ACK), which may also be referred to as ACK/NACK, or the like), a Scheduling Request (SR), or the like. The PRACH may transmit a random access preamble for establishing connection with a cell.

Note that, in the present disclosure, downlink, uplink, or the like may be expressed without "link". Furthermore, various channels may be expressed without adding "Physical" to the beginning thereof.

In the radio communication system 1, a Synchronization Signal (SS), a Downlink Reference Signal (DL-RS), or the like may be transmitted. In the radio communication systems 1, a Cell-specific Reference Signal (CRS), a Channel State Information Reference Signal (CSI-RS), a DeModulation Reference Signal (DMRS), a Positioning Reference Signal (PRS), a Phase Tracking Reference Signal (PTRS), or the like may be transmitted as a DL-RS.

A synchronization signal may be, for example, at least one of a Primary Synchronization Signal (PSS) or a Secondary Synchronization Signal (SSS). A signal block including an SS (PSS or SSS) and a PBCH (and a DMRS for the PBCH) may also be referred to as an SS/PBCH block, an SSB (SS Block), or the like. Note that an SS, SSB, or the like may also be referred to as a reference signal.

Furthermore, in the radio communication system 1, a Sounding Reference Signal (SRS), a demodulation reference signal (DMRS), or the like may be transmitted as an Uplink Reference Signal (UL-RS). Note that a DMRS may also be referred to as a UE-specific Reference Signal.

### (Base station)

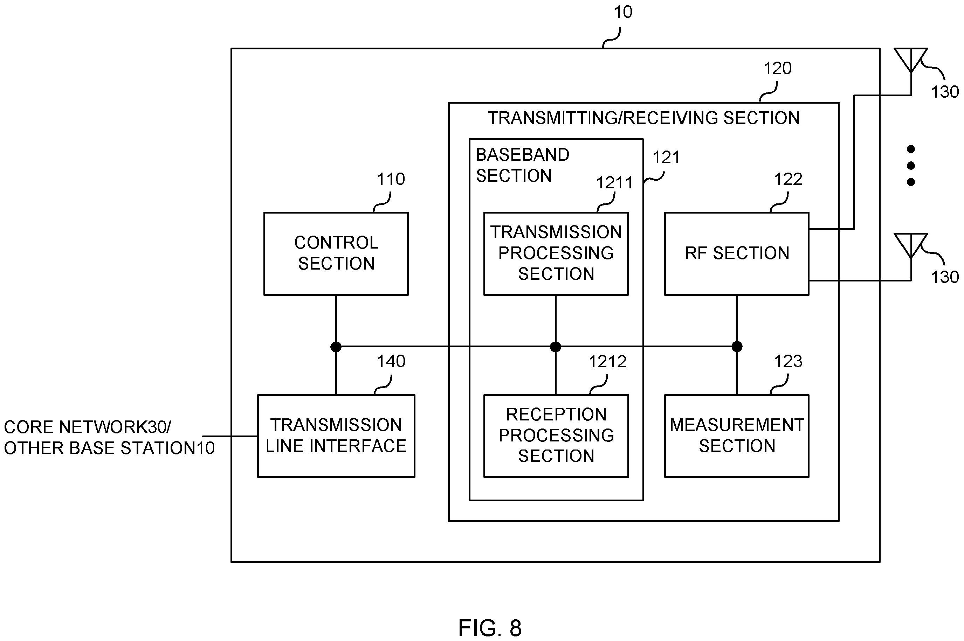

Fig. 8 is a diagram illustrating an example of a configuration of a base station according to an embodiment. The base station 10 includes a control section 110, a transmission/reception section 120, a transmission/reception antenna 130, and a transmission line interface 140. Note that one or more control sections 110, one or more transmission/reception sections 120, one or more transmission/reception antennas 130, and one or more transmission line interfaces 140 may be included.

Note that, although this example mainly describes a functional block which is a characteristic part of the present embodiment, the base station 10 may be assumed also to have another functional block that is necessary for radio communication. Part of processing of each section described below may be omitted.

The control section 110 controls an entire base station 10. The control section 110 can include a controller, a control circuit, or the like, which is described on the basis of common recognition in a technical field according to the present disclosure.

The control section 110 may control signal generation, scheduling (for example, resource allocation or mapping), or the like. The control section 110 may control transmission/reception, measurement, or the like using the transmission/reception section 120, the transmission/reception antenna 130, and the transmission line interface 140. The control section 110 may generate data to be transmitted as a signal, control information, a sequence, or the like, and transfer the data, the control information, the sequence, or the like to the transmission/reception section 120. The control section 110 may perform call processing (such as configuration or releasing) of a communication channel, management of a state of the base station 10, management of a radio resource, or the like.

The transmission/reception section 120 may include a baseband section 121, a Radio Frequency (RF) section 122, and a measurement section 123. The baseband section 121 may include a transmission processing section 1211 and a reception processing section 1212. The transmission/reception section 120 can include a transmitter/receiver, an RF circuit, a base band circuit, a filter, a phase shifter, a measurement circuit, a transmission/reception circuit, or the like, which is described on the basis of common recognition in a technical field according to the present disclosure.

The transmission/reception section 120 may be constituted as an integrated transmission/reception section, or may be constituted by a transmitting section and a reception section. The transmitting section may include the transmission processing section 1211 and the RF section 122. The reception section may include the reception processing section 1212, the RF section 122, and the measurement section 123.

The transmission/reception antenna 130 can include an antenna, for example, an array antenna, or the like, which is described on the basis of common recognition in a technical field according to the present disclosure.

The transmission/reception section 120 may transmit the above-described downlink channel, synchronization signal, Downlink Reference Signal, or the like. The transmission/reception section 120 may receive the above-described uplink channel, Uplink Reference Signal, or the like.

The transmission/reception section 120 may form at least either a transmission beam or a reception beam by using digital beam forming (for example, precoding), analog beam forming (for example, phase rotation), or the like.

On data, control information, or the like acquired from the control section 110 for example, the transmission/reception section 120 (transmission processing section 1211) may perform processing of a Packet Data Convergence Protocol (PDCP) layer, processing of a Radio Link Control (RLC) layer (for example, RLC retransmission control, processing of a Medium Access Control (MAC) layer (for example, HARQ retransmission control), or the like, and may generate a bit string to be transmitted.

On the bit string to be transmitted, the transmission/reception section 120 (transmission processing section 1211) may perform transmission processing such as channel encoding (which may include error correction coding), modulation, mapping, filtering processing, Discrete Fourier Transform (DFT) processing (if necessary), Inverse Fast Fourier Transform (IFFT) processing, precoding, digital-analog conversion, or the like, and may output a baseband signal.

The transmission/reception section 120 (RF section 122) may perform modulation to a radio frequency range, filtering processing, amplification, or the like on the baseband signal, and may transmit a signal in the radio frequency band via the transmission/reception antenna 130.

Meanwhile, the transmission/reception section 120 (RF section 122) may perform amplification, filtering processing, demodulation to a baseband signal, or the like on the signal in the radio frequency range received by the transmission/reception antenna 130.

To acquire user data, or the like, the transmission/reception section 120 (reception processing section 1212) may apply, to the acquired baseband signal, reception processing such as analog-digital conversion, Fast Fourier Transform (FFT) processing, Inverse Discrete Fourier Transform (IDFT) processing (if necessary), filtering processing, demapping, demodulation, decoding (which may include error correction decoding), MAC layer processing, processing of an RLC layer, processing of a PDCP layer, or the like.

The transmission/reception section 120 (measurement section 123) may perform measurement related to the received signal. For example, the measurement section 123 may perform Radio Resource Management (RRM) measurement, Channel State Information (CSI) measurement, or the like on the basis of the received signal. The measurement section 123 may measure received power (for example, Reference Signal Received Power (RSRP)), received quality (for example, Reference Signal Received Quality (RSRQ), a Signal to Interference plus Noise Ratio (SINR), a Signal to Noise Ratio (SNR), signal strength (for example, a Received Signal Strength Indicator (RSSI)), propagation path information (for example, CSI), or the like. A measurement result may be output to the control section 110.

The transmission line interface 140 may transmit/receive a signal (backhaul signaling) to and from an apparatus included in the core network 30, another base stations 10, or the like, and may acquire, transmit, or the like user data (user plane data), control plane data, or the like for the user terminal 20.

Note that a transmitting section and reception section of the base station 10 in the present disclosure may include at least one of the transmission/reception section 120, the transmission/reception antenna 130, or the transmission line interface 140.

Note that the transmission/reception section 120 receives a Beam Failure Recovery reQuest (BFRQ) to a cell in which a Radio Link Failure has occurred.

The control section 110 may determine at least one of a cell or channel utilized by the UE for BFRQ transmission according to whether or not a given secondary cell that supports uplink control channel transmission is configured, and may control BFRQ reception.

### (User terminal)

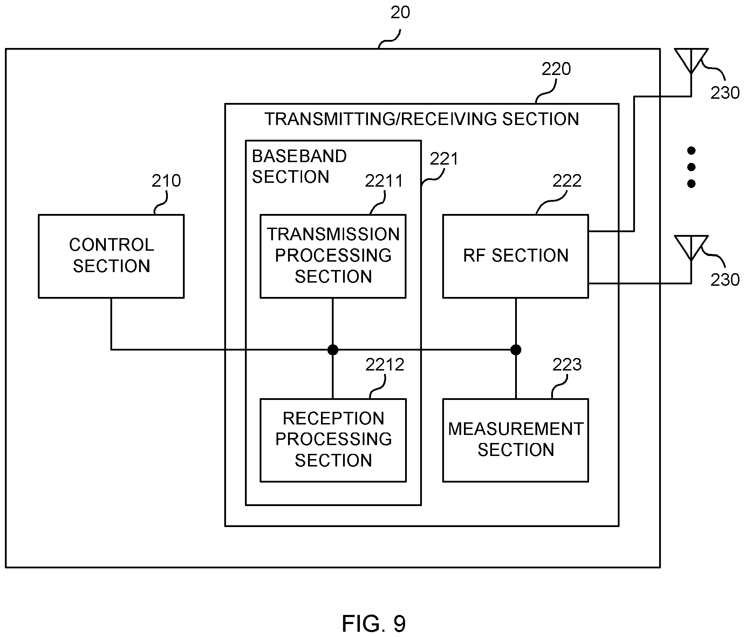

Fig. 9 is a diagram illustrating an example of a configuration of a user terminal according to an embodiment. The user terminal 20 includes a control section 210, a transmission/reception section 220, and a transmission/reception antenna 230. Note that one or more control sections 210, one or more transmission/reception sections 220, and one or more transmission/reception antennas 230 may be included.

Note that, although this example mainly describes a functional block which is a characteristic part of the present embodiment, the user terminal 20 may be assumed also to have another functional block that is necessary for radio communication. Part of processing of each section described below may be omitted.

The control section 210 controls an entire user terminal 20. The control section 210 can include a controller, a control circuit, or the like, which is described on the basis of common recognition in a technical field according to the present disclosure.

The control section 210 may control signal generation, mapping, or the like. The control section 210 may control transmission/reception, measurement, or the like using the transmission/reception section 220 and the transmission/reception antenna 230. The control section 210 may generate data to be transmitted as a signal, control information, a sequence, or the like, and transfer the data, the control information, the sequence, or the like to the transmission/reception section 220.

The transmission/reception section 220 may include a baseband section 221, an RF section 222, or a measurement section 223. The baseband section 221 may include a transmission processing section 2211 or a reception processing section 2212. The transmission/reception section 220 can include a transmitter/receiver, an RF circuit, a base band circuit, a filter, a phase shifter, a measurement circuit, a transmission/reception circuit, or the like, which is described on the basis of common recognition in a technical field according to the present disclosure.

The transmission/reception section 220 may be constituted as an integrated transmission/reception section, or may be constituted by a transmitting section and a reception section. The transmitting section may include the transmission processing section 2211 or the RF section 222. The reception section may include the reception processing section 2212, the RF section 222, or the measurement section 223.

The transmission/reception antenna 230 can include an antenna, for example, an array antenna, or the like, which is described on the basis of common recognition in a technical field according to the present disclosure.

The transmission/reception section 220 may receive the above-described downlink channel, synchronization signal, Downlink Reference Signal, or the like. The transmission/reception section 220 may transmit the above-described uplink channel, Uplink Reference Signal, or the like.

The transmission/reception section 220 may form at least either a transmission beam or a reception beam by using digital beam forming (for example, precoding), analog beam forming (for example, phase rotation), or the like.

On data, control information, or the like acquired from the control section 210 for example, the transmission/reception section 220 (transmission processing section 2211) may perform processing of a PDCP layer, processing of an RLC layer (for example, RLC retransmission control, processing of an MAC layer (for example, HARQ retransmission control), and may generate a bit string to be transmitted.

On the bit string to be transmitted, the transmission/reception section 220 (transmission processing section 2211) may perform transmission processing such as channel encoding (which may include error correction coding), modulation, mapping, filtering processing, DFT processing (if necessary), IFFT processing, precoding, or digital-analog conversion, and may output a baseband signal.

Note that whether or not to apply DFT processing may be determined on the basis of a configuration of transform precoding. In a case where transform precoding is enabled for a certain channel (for example, PUSCH), the transmission/reception section 220 (transmission processing section 2211) may perform DFT processing as the above-described transmission processing in order to transmit the channel by using a DFT-s-OFDM waveform. In a case where transform precoding is not enabled for a certain channel (for example, PUSCH), the transmission/reception section 220 (transmission processing section 2211) does not need to perform DFT processing as the above-described transmission processing.

The transmission/reception section 220 (RF section 222) may perform modulation to a radio frequency range, filtering processing, amplification, or the like on the baseband signal, and may transmit a signal in the radio frequency band via the transmission/reception antenna 230.

Meanwhile, the transmission/reception section 220 (RF section 222) may perform amplification, filtering processing, demodulation to a baseband signal, or the like on the signal in the radio frequency range received by the transmission/reception antenna 230.

To acquire user data, or the like, the transmission/reception section 220 (reception processing section 2212) may apply, to the acquired baseband signal, reception processing such as analog-digital conversion, FFT processing, IDFT processing (if necessary), filtering processing, demapping, demodulation, decoding (which may include error correction decoding), MAC layer processing, processing of an RLC layer, processing of a PDCP layer, or the like.

The transmission/reception section 220 (measurement section 223) may perform measurement related to the received signal. For example, the measurement section 223 may perform RRM measurement, CSI measurement, or the like on the basis of the received signal. The measurement section 223 may measure received power (for example, RSRP), received quality (for example, RSRQ, an SINR, or an SNR), signal strength (for example, an RSSI), propagation path information (for example, CSI), or the like. A measurement result may be output to the control section 210.

Note that a transmitting section and reception section of the user terminal 20 in the present disclosure may include at least one of the transmission/reception section 220, the transmission/reception antenna 230, or the transmission line interface 240.

Note that the transmission/reception section 220 transmits a Beam Failure Recovery reQuest (BFRQ) to a cell in which a Radio Link Failure has occurred.

The control section 210 determines at least one of a cell to which a BFRQ is transmitted and a channel to be utilized for BFRQ transmission according to whether or not a given secondary cell that supports uplink control channel transmission is configured.

For example, in a case where a given secondary cell is configured, the control section 210 may select the given secondary cell as a cell to which a BFRQ is transmitted. Furthermore, in a case where a given secondary cell is not configured, the control section 210 may select a primary cell as a cell to which a BFRQ is transmitted.

Furthermore, in a case where a given secondary cell is configured, the control section 210 may select a Physical Uplink Control Channel of the given secondary cell as a channel to be utilized for BFRQ transmission. Furthermore, in a case where a given secondary cell is not configured, the control section 210 may select at least either a Physical Random Access Channel or a Physical Uplink Shared Channel as a channel to be utilized for BFRQ transmission.

### (Hardware configuration)

Note that the block diagrams used to describe the above embodiment illustrate blocks in functional sections. These functional blocks (configuration sections) may be implemented by any combination of at least either hardware or software. Furthermore, the method for implementing each of the functional blocks is not particularly limited. That is, each of the functional blocks may be implemented by a single apparatus physically or logically aggregated, or may be implemented by directly or indirectly connecting two or more physically or logically separate apparatuses (by wire or wirelessly, or the like, for example) and using these plural apparatuses. A functional block may be implemented by combination of the one or a plurality of above-described apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (configuration section) that causes transmission to function may be referred to as a transmitting section, a transmitter or the like. In any case, as described above, the implementation method is not particularly limited.

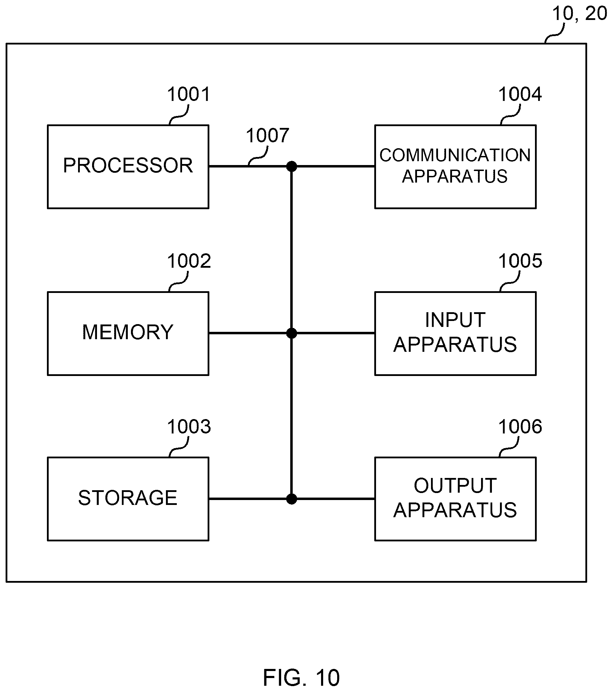

For example, the base station, the user terminal, or the like according to the embodiment of the present disclosure may function as a computer that executes processing a radio communication method in the present disclosure. Fig. 10 is a diagram illustrating an example of a hardware configuration of the base station and user terminal according to an embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, or the like.

Note that, in the present disclosure, wording such as an apparatus, a circuit, a device, a section, or a section can be replaced with each other. The hardware configuration of the base station 10 and user terminal 20 may be configured to include one or a plurality of the apparatuses illustrated in the drawings, or may be configured not to include some apparatuses.

For example, although only one processor 1001 is illustrated, a plurality of processors may be provided. Furthermore, processing may be executed by one processor, or processing may be performed in parallel, in sequence, or by using another manner, by two or more processors. Note that the processor 1001 may be implemented with one or more chips.

Each function of the base station 10 and user terminal 20 is implemented by, for example, causing hardware such as the processor 1001 or memory 1002 to read given software (program), so that the processor 1001 operates to control communication via the communication apparatus 1004 or control at least either reading or writing of data in the memory 1002 or the storage 1003.

The processor 1001 controls an entire computer by, for example, causing an operating system to operate. The processor 1001 may include a Central Processing Unit (CPU) including an interface with peripheral terminal, a control apparatus, an operation apparatus, a register, or the like. For example, at least a part of the above-described control section 110 (210), transmission/reception section 120 (220), or the like may be implemented by the processor 1001.

Furthermore, the processor 1001 reads a program (program code), a software module, data, or the like from at least either the storage 1003 or the communication apparatus 1004 into the memory 1002, and executes various kinds of processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a Read Only Memory (ROM), an Erasable Programmable ROM (EPROM), an Electrically EPROM (EEPROM), a Random Access Memory (RAM), or another appropriate storage medium. The memory 1002 may also be referred to as a register, a cache, a main memory (primary storage apparatus), or the like. The memory 1002 can store a program (program code), a software module, or the like, which is executable for performing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc (Compact Disc ROM (CD-ROM), or the like), a digital versatile disc, a Blu-ray (registered trademark) disk, a removable disk, a hard disk drive, a smart card, a flash memory device (for example, a card, a stick, a key drive, or the like), a magnetic stripe, a database, a server, or another appropriate storage medium. The storage 1003 may also be referred to as a secondary storage apparatus.

The communication apparatus 1004 is hardware (transmitting/receiving device) for performing inter-computer communication via at least either a wired network or a wireless network, and for example, is referred to as a network device, a network controller, a network card, a communication module, or the like. The communication apparatus 1004 may include a high frequency switch, a duplexer, a filter, a frequency synthesizer, or the like in order to implement, for example, at least either Frequency Division Duplex (FDD) or Time Division Duplex (TDD). For example, the transmission/reception section 120 (220), the transmission/reception antenna 130 (230), or the like described above may be implemented by the communication apparatus 1004. The transmission/reception section 120 (220) may be implemented by physically or logically separating the transmitting section 120a (220a) and the reception section 120b (220b) from each other.

The input apparatus 1005 is an input device configured to receive input from outside (for example, a keyboard, a mouse, a microphone, a switch, a button, a sensor, or the like). The output apparatus 1006 is an output device configured to perform output to outside (for example, a display, a speaker, a Light Emitting Diode (LED) lamp, or the like. Note that the input apparatus 1005 and the output apparatus 1006 may be provided in an integrated configuration (for example, a touch panel).

Furthermore, each of the apparatuses, such as the processor 1001, the memory 1002, or the like is connected by the bus 1007 for communication of information. The bus 1007 may include a single bus, or may include different buses between each of the apparatuses.

Furthermore, the base station 10 and the user terminal 20 may include hardware such as a microprocessor, a Digital Signal Processor (DSP), an Application Specific Integrated Circuit (ASIC), a Programmable Logic Device (PLD), a Field Programmable Gate Array (FPGA), or the like, and part or all of each of the functional blocks may be implemented by the hardware. For example, the processor 1001 may be implemented by using at least one of these pieces of hardware.

### (Modifications)

Note that terms described in the present disclosure and terms necessary for understanding the present disclosure may be replaced with other terms that have the same or similar meanings. For example, a channel, a symbol, and a signal (or signaling) may be replaced with one another. Furthermore, the signal may be a message. A reference signal may be abbreviated as an RS, and may also be referred to as a pilot, a pilot signal, or the like, depending on which standard applies. Furthermore, a Component Carrier (CC) may also be referred to as a cell, a frequency carrier, a carrier frequency, or the like.

A radio frame may include one or a plurality of periods (frames) in a time domain. Each of the one or a plurality of periods (frames) that constitute a radio frame may also be referred to as a subframe. Moreover, a subframe may include one or a plurality of slots in a time domain. A subframe may be a fixed time duration (for example, 1 ms) that is not dependent on numerology.

Here, the numerology may be a communication parameter applied to at least either transmission or reception of a certain signal or channel. For example, the numerology may indicate at least one of SubCarrier Spacing (SCS), a bandwidth, symbol duration, a cyclic prefix length, a Transmission Time Interval (TTI), the number of symbols per TTI, a radio frame configuration, specific filtering processing to be performed by a transceiver in a frequency domain, specific windowing processing to be performed by a transceiver in a time domain, or the like.

In the time domain, a slot may include one or a plurality of Orthogonal Frequency Division Multiplexing (OFDM) symbols, Single Carrier Frequency Division Multiple Access (SC-FDMA) symbols, or the like. Furthermore, a slot may be a time unit based on numerology.

A slot may include a plurality of mini slots. Each of the mini slots may include one or a plurality of symbols in a time domain. Furthermore, a mini slot may also be referred to as a subslot. A mini slot may include fewer symbols than slots. A PDSCH (or PUSCH) transmitted in a time unit larger than a time unit of a mini slot may also be referred to as PDSCH (PUSCH) mapping type A. A PDSCH (or PUSCH) transmitted by using a mini slot may also be referred to as PDSCH (PUSCH) mapping type B.

A radio frame, a subframe, a slot, a mini slot and a symbol all represent a time unit in signal transmission. A radio frame, a subframe, a slot, a mini slot, and a symbol may be referred to as respective different names. Note that time units such as a frame, a subframe, a slot, a mini slot, and a symbol in the present disclosure may be replaced with each other.

For example, one subframe may also be referred to as a TTI, a plurality of consecutive subframes may be referred to as a TTI, and one slot or one mini slot may be referred to as a TTI. That is, at least either a subframe or a TTI may be a subframe (1 ms) in an existing LTE, may be a period shorter than 1 ms (for example, 1 to 13 symbols), and may be a period longer than 1 ms. Note that a unit to represent a TTI may also be referred to as a slot, a mini slot, or the like, instead of a subframe.

Here, a TTI refers to a minimum time unit of scheduling in radio communication, for example. For example, in an LTE system, a base station schedules to allocate, to each user terminal, a radio resource (such as a frequency bandwidth or transmission power that can be used in each user terminal) in TTI units. Note that a definition of a TTI is not limited to this.

The TTI may be a transmission time unit of a channel-encoded data packet (transport blocks), a code block, a codeword, or the like, or may be a processing unit of scheduling, link adaptation, or the like. Note that when a TTI is provided, a time interval (for example, the number of symbols) in which a transport block, a code block, a codeword, or the like is actually mapped may be shorter than the TTI.

Note that, in a case where one slot or one mini slot is referred to as a TTI, one or more TTIs (that is, one or more slots or one or more mini slots) may be a minimum time unit of scheduling. Furthermore, the number of slots (the number of mini slots) included a minimum time unit of the scheduling may be controlled.

A TTI having time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than a usual TTI may also be referred to as a shortened TTI, a short TTI, a partial TTI (or a fractional TTI), a shortened subframe, a short subframe, a mini slot, a subslot, a slot, or the like.

Note that a long TTI (for example, a usual TTI, a subframe, or the like) may be replaced with a TTI having time duration exceeding 1 ms, and a short TTI (for example, a shortened TTI, or the like) may be replaced with a TTI having TTI duration less than the TTI duration of the long TTI and 1 ms or longer.

A Resource Block (RB) is a unit of resource allocation in a time domain and a frequency domain, and may include one or a plurality of consecutive subcarriers in the frequency domain. The number of subcarriers included in an RB may be the same regardless of numerology, and may be 12, for example. The number of subcarriers included in an RB may be determined on the basis of numerology.

Furthermore, an RB may include one or a plurality of symbols in a time domain, and may be one slot, one mini slot, one subframe or one TTI in length. One TTI, one subframe, or the like may each include one or a plurality of resource blocks.

Note that one or a plurality of RBs may also be referred to as a physical resource block (Physical RB (PRB), a Sub-Carrier Group (SCG), a Resource Element Group (REG), a PRB pair, an RB pair, or the like.

Furthermore, a Resource block may include one or a plurality of Resource Elements (REs). For example, one RE may be a radio resource domain of one subcarrier and one symbol.

A Bandwidth Part (BWP) (which may also be referred to as a partial bandwidth, or the like) may represent a subset of consecutive common RBs (common resource blocks) for certain numerology in a certain carrier. Here, the common RBs may be specified by an index of the RBs based on a common reference point of the carrier. A PRB may be defined in a certain BWP and numbered in the BWP.

The BWP may include a BWP for a UL (UL BWP) and a BWP for a DL (DL BWP). For the UE, one or a plurality of BWPs may be configured in one carrier.

At least one of configured BWPs may be active, and the UE does not need to assume to transmit or receive a given signal/channel outside of the active BWP. Note that "cell", "carrier", or the like in the present disclosure may be replaced with "BWP".

Note that the structures of radio frames, subframes, slots, mini slots, symbols, or the like described above are merely examples. For example, composition of the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, symbol duration, length of a Cyclic Prefix (CP), or the like can be variously changed.

Furthermore, information, a parameter, or the like described in the present disclosure may be represented in absolute values, represented in relative values with respect to given values, or represented by using another corresponding information. For example, a radio resource may be instructed by a given index.

The names used for parameters, or the like, in the present disclosure are in no respect limiting. Moreover, an equation, or the like using these parameters may differ from an equation, or the like explicitly disclosed in the present disclosure. Because various channels (a Physical Uplink Control Channel (PUCCH), a Physical Downlink Control Channel (PDCCH), or the like) and information elements can be identified by any suitable names, the various names allocated to these individual channels and information elements are in no respect limiting.

The information, signals, and the like described in the present disclosure may be represented by using any one of various different technologies. For example, data, an instruction, a command, information, a signal, a bit, a symbol a chip, or the like, all of which may be referenced throughout the herein-contained description, may be represented by voltage, current, an electromagnetic wave, a magnetic field or particle, an optical field or photon, or any combination of these.

Furthermore, information, a signal, or the like may be output at least either from a higher layer to a lower layer, or from a lower layer to a higher layer. Information, a signal, or the like may be input or output via a plurality of network nodes.

Information, a signal, or the like that is input or output may be stored in a specific location (for example, on a memory), or may be managed by using a control table. Information, a signal, or the like to be input or output may be overwritten, updated or appended. Information, a signal, or the like that is output may be deleted. Information, a signal, or the like that is input may be transmitted to another apparatus.

Notification of information is not limited to the aspects or embodiment described in the present disclosure, and may be performed by using another method. For example, notification of information in the present disclosure may be performed by using physical layer signaling (for example, Downlink Control Information (DCI), Uplink Control Information (UCI), higher layer signaling (for example, Radio Resource Control (RRC) signaling, broadcast information (Master Information Block (MIB), System Information Block (SIB), or the like), Medium Access Control (MAC) signaling, another signal, or the like, or a combination of these.

Note that physical layer signaling may also be referred to as Layer 1/Layer 2 (L1/L2) control information (L1/L2 control signals), L1 control information (L1 control signal), or the like. Furthermore, RRC signaling may also be referred to as an RRC message, and may be, for example, an RRC Connection Setup message, an RRC Connection Reconfiguration, or the like. Furthermore, MAC signaling may be notified by using, for example, an MAC Control Element (MAC CE).

Furthermore, notification of given information (for example, notification of information that "X holds") may not only be explicit, but may be implicit (for example, by not notifying of the information, or by notifying of another information).

Judging may be made by a value represented by one bit (0 or 1), may be made by a boolean value that represents true or false, or may be made by comparison of numerical values (for example, comparison with a given value).

Software, whether referred to as software, firmware, middleware, microcode, or hardware description language, or referred to as another name, should be interpreted broadly, to mean an instruction, instruction set, code, code segment, program code, program, subprogram, software module, application, software application, software package, routine, subroutine, object, executable file, execution thread, procedure, function, or the like.

Furthermore, software, a command, information, or the like may be transmitted or received via a communication medium. For example, in a case where software is transmitted from a website, a server, or another remote source by using at least either a wired technology (a coaxial cable, an optical fiber cable, a twisted-pair cable, a Digital Subscriber Line (DSL), or the like) or a wireless technology (infrared radiation, a microwave, or the like), at least either the wired technology or the wireless technology is included in definition of the communication medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", "panel", or the like may be used interchangeably.

In the present disclosure, the terms such as "Base Station (BS)", "radio base station", "fixed station", "NodeB", "eNodeB (eNB)", "gNodeB (gNB)", "access point", "Transmission Point (TP)", "Reception Point (RP)", "Transmission/Reception Point (TRP)", "panel", "cell", "sector", "cell group", "carrier", "component carrier", or the like may be used interchangeably. A base station may be referred to as a term such as a macro cell, a small cell, a femto cell, a pico cell, or the like.

A base station can include one or a plurality of (for example, three) cells. In a case where a base station includes a plurality of cells, an entire Coverage Area of the base station can be divided into a plurality of smaller areas, and each of the smaller areas can provide a communication service through a base station subsystem (for example, an indoor small base station (Remote Radio Head (RRH))). The term "cell" or "sector" refers to all or part of a Coverage Area of at least either a base station or base station subsystem that provides a communication service within the coverage.

In the present disclosure, the terms "Mobile Station (MS)", "user terminal", "User Equipment (UE)", "terminal", or the like may be used interchangeably.

A Mobile Station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or one of some other appropriate terms.

At least either a base station or a Mobile Station may also be referred to as a transmission apparatus, a reception apparatus, a radio communication apparatus, or the like. Note that at least either the base station or the Mobile Station may be a device mounted on a moving body, a moving body itself, or the like. The moving body may be a conveyance (for example, a car, an airplane, or the like), an unmanned moving body (for example, a drone, an autonomous car, or the like), or a (manned or unmanned) robot. Note that at least either the base station or the Mobile Station includes an apparatus that does not necessarily move during communication operation. For example, at least either the base station or the mobile station may be an Internet of Things (IoT) device such as a sensor.

Furthermore, a base station in the present disclosure may be replaced with a user terminal. For example, each aspect/embodiment of the present disclosure may be applied to a configuration in which communication between the base station and the user terminal is replaced with communication among a plurality of user terminals (which may also be referred to as, for example, Device to Device (D2D), Vehicle-to-Everything (V2X), or the like. In this case, the user terminal 20 may be configured having a function that the above-described base station 10 has. Furthermore, the wording such as "up" and "down" may be replaced with wording corresponding to terminal-to-terminal communication (for example, "side"). For example, an uplink channel, a downlink channel, or the like may be replaced with a side channel.

Similarly, a user terminal in the present disclosure may be replaced with a base station. In this case, the base station 10 may be configured having a function that the above-described user terminal 20 has.

Certain operation described in the present disclosure to be performed by a base station may, in some cases, be performed by an upper node. In a network including one or a plurality of network nodes with base stations, it is obvious that various operations for communication with terminals are performed by a base station, one or more network nodes (which may be, but not limited to, Mobility Management Entities (MMEs), Serving-Gateways (S-GWs), or the like, for example) or a combination of these.

Each of the aspects and embodiment in the present disclosure may be used individually or in combination, or may be switched depending on execution. Furthermore, a processing procedure, a sequence, a flowchart, or the like of the aspects and embodiment in the present disclosure may be changed as long as inconsistencies do not arise. For example, for the methods described in the present disclosure, elements of various steps are presented by using an exemplary order, and are not limited to the presented specific order.

The aspects and embodiment in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system that utilizes another appropriate radio communication method, a next generation system extended on the basis of these, or the like. Furthermore, a plurality of systems may be applied in combination (for example, a combination of LTE or LTE-A with 5G, or the like).

The phrase "on the basis of" used in the present disclosure does not mean "on the only basis of", unless otherwise specified. In other words, the phrase "on the basis of" means both "on the only basis of" and "at least on the basis of".

Any reference to the elements with a designation such as "first", "second", or the like used in the present disclosure does not generally limit the number, quantity, or order of the elements. These designations may be used in the present disclosure only for convenience, as a method for distinguishing between two or more elements. Therefore, reference to the first and second elements does not mean that only two elements may be adopted, or that the first element must precede the second element in some way.

The terms "determining" used in the present disclosure may include a wide variety of operations. For example, "determining" may be interpreted to mean "determining" operation of judging, calculating, computing, processing, deriving, investigating, looking up, searching, inquiring (for example, looking up in a table, database, or another data structure), confirming, or the like.

Furthermore, "determining" may be interpreted to mean "determining" operation of receiving (for example, receiving information), transmitting (for example, transmitting information), inputting, outputting, accessing (for example, accessing data in a memory), or the like.

Furthermore, "determining" may be interpreted to mean "determining" operation of resolving, selecting, choosing, establishing, comparing, or the like. In other words, "determining" may be interpreted to mean "determining" some operation.

Furthermore, "determining" may be replaced with "assuming", "expecting", "considering", or the like.

The terms "connected", "coupled", or any variation of these terms used in the present disclosure mean all direct or indirect connection or coupling between two or more elements, and may include presence of one or more intermediate elements between the two elements that are "connected" or "coupled" to each other. Coupling or connection between the elements may be physical, logical or a combination of these. For example, "connection" may be replaced with "access".

In a case where two elements are connected in the present disclosure, these elements may be considered to be "connected" or "coupled" to each other by using one or more electrical wires, cables, printed electrical connections, or the like, or, as non-limiting and non-inclusive examples, by using electromagnetic energy having a wavelength in a radio frequency domain, microwave domain, or optical (both visible and invisible) domain, or the like.

In the present disclosure, the phrase "A and B are different" may mean "A and B are different from each other". Note that the term may mean that "A and B are respectively different from C". The terms such as "leave" "coupled" or the like may be interpreted similarly as "different".

In a case where terms such as "include", "including", or a variation of these are used in the present disclosure, these terms are intended to be inclusive similarly to a case where "comprising" is used. Moreover, the term "or" used in the present disclosure is intended to be not an exclusive-OR.

In the present disclosure, for example, a case where an article, such as "a", "an", or "the" is added in English translation may be interpreted that a noun that follows the article may be plural.

Although the invention according to the present disclosure has been described in detail above, it is obvious for a person skilled in the art that the invention according to the present disclosure is by no means limited to the embodiments described in the present disclosure. The invention according to the present disclosure can be implemented with correction or modification, without departing from the spirit or scope of the invention defined by the claims. Therefore, description of the present disclosure is provided for the purpose of exemplification and explanation, and is by no means a limitation to the invention according to the present disclosure.

## Claims

1. A user terminal comprising:
a transmitting section that transmits a Beam Failure Recovery reQuest (BFRQ) to a cell in which a Radio Link Failure has occurred; and
a control section that determines, according to whether or not a given secondary cell that supports uplink control channel transmission is configured, at least one of a cell to which the BFRQ is transmitted or a channel utilized for the BFRQ transmission.

2. The user terminal according to claim 1,
wherein the control section selects the given secondary cell as a cell to which the BFRQ is transmitted in a case where the given secondary cell is configured.

3. The user terminal according to claim 1,
wherein the control section selects a primary cell as a cell to which the BFRQ is transmitted in a case where the given secondary cell is not configured.

4. The user terminal according to claim 1,
wherein the control section selects a Physical Uplink Control Channel of the given secondary cell as a channel utilized for the BFRQ transmission in a case where the given secondary cell is configured.

5. The user terminal according to claim 1,
wherein the control section selects at least either a Physical Random Access Channel or a Physical Uplink Shared Channel as a channel utilized for the BFRQ transmission in a case where the given secondary cell is not configured.

6. A radio communication method comprising:
a step of transmitting a Beam Failure Recovery reQuest (BFRQ) to a cell in which a Radio Link Failure has occurred; and
a step of determining, according to whether or not a given secondary cell that supports uplink control channel transmission is configured, at least one of a cell to which the BFRQ is transmitted or a channel utilized for the BFRQ transmission.
